# EUROPÄISCHE PATENTANMELDUNG

(11) **EP 2 720 486 A1**
(43) Veröffentlichungstag der Anmeldung: **16.04.2014**
(21) Anmeldenummer: 13185199.0
(22) Anmeldetag: 19.09.2013
(51) Int. Cl.: H04W 24/08, H04L 12/24, H04L 12/28, H04L 12/26

(54) **Verfahren zum Austauschen von Steuerungs- und/ oder Diagnosedaten zwischen Kommunikationsteilnehmern in einem drahtlosen Netzwerk**

(30) Priorität: 27.09.2012 DE 102012217637
(71) Anmelder: Insta Elektro GmbH, 58509 Lüdenscheid (DE)
(72) Erfinder: Scharbatke, Kai, 58515 Lüdenscheid (DE); Kress, Wolfgang, 53721 Siegburg (DE)
(74) Vertreter: von Kreisler Selting Werner

(57) **Zusammenfassung**

Die Erfindung betrifft ein Verfahren zum Austauschen von Steuerungs- und/ oder Diagnosedaten zwischen Kommunikationsteilnehmern (10a, 10b, 12a, 12b, 14a, 14b, 16) in einem drahtlosen Netzwerk, insbesondere in einem Gebäudeautomationssystem, wobei das Verfahren die folgenden Schritte aufweist:
a) Installieren der Kommunikationsteilnehmer (10a, 10b, 12a, 12b, 14a, 14b, 16) an verschiedenen Stellen eines Gebäudes (18) oder einer anderen räumlichen Struktur in der die Kommunikationsteilnehmer Daten austauschen sollen
b) Erstellen eines Kommunikationsplans (20) indem durch Kommunikationsverbindungen (22, 24, 26, 28) hinterlegt ist welche Kommunikationsteilnehmer mit welchen anderen Kommunikationsteilnehmern Daten austauschen sollen
c) Ausführen eines Verbindungstests, indem versucht wird, von jedem Kommunikationsteilnehmer (10a) aus zu allen anderen Kommunikationsteilnehmern (10b, 16), mit denen er gemäß dem erstellten Kommunikationsplan (20) Daten austauschen soll, Daten mit einer vorgewählten Übertragunsqualität zu übertragen
d) Anzeigen der Ergebnisse des Verbindungstests, indem insbesondere im Kommunikationsplan (20) in Bezug auf einen Kommunikationsteilnehmer (10a) angezeigt wird welche anderen Kommunikationsteilnehmer (10b, 16) die mit diesem Kommunikationsteilnehmer (10a) Daten austauschen sollen, diese Daten mit der vorgewählten Übertragungsqualität empfangen haben und/oder welche anderen Kommunikationsteilnehmer (10b, 16) diese Daten nicht mit der vorgewählten Übertragungsqualität empfangen haben.

## Beschreibung

Die Erfindung betrifft ein Verfahren zum Austauschen von Steuerungs- und/ oder Diagnosedaten zwischen Kommunikationsteilnehmern in einem drahtlosen Netzwerk.

Hierbei kann es sich beispielsweise um ein drahtloses Netzwerk eines Gebäudeautomationssystems handeln. Wesentliches Merkmal eines solchen Netzwerks ist, dass Kommunikationsteilnehmer existieren, die z. B. mit einem Teil der übrigen Kommunikationsteilnehmer direkt Daten austauschen. Es ist z. B. nicht notwendig, dass zentrale Komponenten, wie beispielsweise Router existieren, über die der Datenaustausch zwischen den Kommunikationsteilnehmern abgewickelt wird.

Netzwerke zur Kommunikation zwischen räumlich verteilten Kommunikationsteilnehmern sind auch aus anderen Gebieten der Technik bekannt. Beispielsweise existieren derartige Netzwerke in Fahrzeugen, als Datennetzwerke, beispielsweise in einem Unternehmen, in der Industrieautomation und wie bereits erwähnt in der Gebäudeautomatisierung. Zur Vernetzung der Systemkomponenten in der Gebäudetechnik werden Installationsbusse eingesetzt, die die verschiedenen Systemkomponenten wie beispielsweise Schalter (die im Allgemeinen als Sensoren bezeichnet werden), Aktoren und Steuerkomponenten miteinander verbinden. Bei den Aktoren kann es sich beispielsweise um Komponenten der Lichtanlage, um eine Heizung oder Klimaanlage, um Haushaltsgeräte, eine Alarmanlage usw. handeln. Bei einem Aktor kann es sich weiterhin um ein Element handeln, das eine Änderung in einer anderen Komponente des Systems bewirkt, ohne dass die Änderung im Aktor selbst sichtbar wird. So kann z. B. ein Aktor, im Sinne der vorliegenden Erfindung, beispielsweise ein Relais sein, das einen Elektromotor ansteuert, durch den Beispielsweise Rollläden angetrieben werden. Dieses Relais kann z. B. in einem Schaltschrank installiert sein und durch einen Sensor geschaltet werden, sodass die Rollläden manuell hoch und runter gefahren werden können. In diesem Fall wird das Relais im Sinne der Erfindung als Aktor verstanden, während die Rollläden nicht der eigentliche Aktor sind. Diese könnten z. B. als Effektor bezeichnet werden.

Beim Konfigurieren eines Gebäudeautomationssystems ist es notwendig, die Sensoren mit denjenigen Aktoren logisch zu verknüpfen, die durch diese Sensoren angesteuert werden sollen. Konkret ausgedrückt muss z. B. logisch festgelegt werden, welche Lampen eingeschaltet werden sollen, wenn ein bestimmter Schalter gedrückt wird. In neuerer Zeit geht der Trend in der Gebäudeautomatisierung dazu, die verschiedenen Systemkomponenten drahtlos miteinander zu vernetzen. Hierdurch entfällt die Notwendigkeit, Kabel zwischen den einzelnen Komponenten zu verlegen, wodurch es möglich ist, moderne Gebäudeautomationssysteme in bestehende Gebäude zu integrieren. Derartige Nachrüstungen von Gebäudeautomationssystemen machen einen wichtigen Teil des Marktes aus, sodass die drahtlose Kommunikation zwischen Komponenten eines Gebäudeautomationssystems von herausragender Wichtigkeit ist.

Bei der drahtlosen Kommunikation zwischen Kommunikationsteilnehmern eines Netzwerks muss sichergestellt werden, dass die einzelnen Kommunikationsteilnehmer untereinander Daten in zuverlässiger Weise austauschen können. Um einen reibungslosen Betrieb gewährleisten zu können, muss dies z. B. von einem Techniker im Rahmen der Installation der Komponenten überprüft werden. Bisher musste der Techniker hierfür in Bezug auf jeden Kommunikationsteilnehmer einzeln überprüfen, ob dieser mit allen anderen Kommunikationsteilnehmern, mit denen er gemäß der gewünschten Anwendung Daten übertragen soll, hierzu in zuverlässiger Weise in der Lage ist. Da z. B. ein Gebäudeautomationssystem eine sehr große Anzahl einzelner Kommunikationsteilnehmer ausweisen kann, stellt eine solche manuelle Überprüfung der Verbindungsqualität eine sehr aufwändige Tätigkeit dar.

Aufgabe der Erfindung ist es, ein vereinfachtes Verfahren zum Optimieren der Verbindungsqualität zwischen Kommunikationsteilnehmern in einem drahtlosen Netzwerk bereitzustellen.

Die Lösung der Aufgabe erfolgt erfindungsgemäß durch die Merkmale des Anspruchs 1.

Das erfindungsgemäße Verfahren dient dem Optimieren der Verbindungsqualität zwischen Kommunikationsteilnehmern in einem drahtlosen Netzwerk. Hierbei kann es sich beispielsweise um ein Netzwerk in einem Gebäudeautomationssystem handeln. Jedoch kann das erfindungsgemäße Verfahren auch Anwendung in anderen Netzwerken, beispielsweise in Fahrzeugnetzen, in Datennetzen oder in der Industrieautomation finden. Wesentliches Merkmal eines solchen Netzwerks ist erfindungsgemäß, dass Kommunikationsteilnehmer existieren, die z. B. mit einem Teil der Kommunikationsteilnehmer dieses Netzwerks Daten direkt austauschen. Es sind somit keine zentralen Komponenten, wie z. B. Router notwendig, über die der Datenaustausch zwischen den Kommunikationsteilnehmern organisiert wird. Weiterhin können in einer bevorzugten Ausführungsform auch Kommunikationsteilnehmer existieren, die aufgrund einer großen räumlichen Entfernung zueinander oder aufgrund von anderen Störfaktoren keine Daten untereinander austauschen können. Anders ausgedrückt, ist es bei dieser bevorzugten Ausführungsform nicht zwingend, dass jeder Kommunikationsteilnehmer mit allen anderen Kommunikationsteilnehmern des Netzwerks Daten austauschen kann. Die Notwendigkeit, welcher Kommunikationsteilnehmer mit welchen anderen Teilnehmern Daten austauschen können muss, ergibt sich aus der Logik der jeweiligen Anwendung.

Das erfindungsgemäße Verfahren weist die folgenden Verfahrensschritte auf:
a) Zunächst werden die einzelnen Kommunikationsteilnehmer an verschiedenen Stellen eines Gebäudes oder einer anderen räumlichen Struktur, in der die Kommunikationsteilnehmer Daten austauschen sollen, installiert. Es ist bevorzugt, dass es sich bei den Kommunikationsteilnehmern um Sensoren und/oder Aktoren handelt. Weiterhin ist bevorzugt, dass die Kommunikationsteilnehmer Daten direkt untereinander austauschen, ohne dass diese über eine zentrale Komponente z.B. einen Server geleitet werden. Bei der anderen räumlichen Struktur kann es sich beispielsweise um ein Fahrzeug, eine Fabrik oder ein Teil hiervon, ein Büro oder ein Unternehmen handeln. Grundsätzlich ist das erfindungsgemäße Verfahren auf jede räumliche Struktur anwendbar, in der Kommunikationsteilnehmer direkt Daten untereinander austauschen.
b) Es erfolgt ein Erstellen eines insbesondere grafischen Kommunikationsplans, in dem durch Kommunikationsverbindungen hinterlegt ist, welche Kommunikationsteilnehmer mit welchen Kommunikationsteilnehmern Daten austauschen sollen. Dieser Kommunikationsplan kann beispielsweise durch eine Software auf einem Rechner graphisch dargestellt und einem Techniker angezeigt werden. Aus diesem Kommunikationsplan geht somit hervor, welche Kommunikationsteilnehmer untereinander Daten austauschen sollen und welche nicht. Die Logik, die die Basis für diesen Kommunikationsplan bildet, geht aus der gewünschten Anwendung hervor.
c) Es wird ein Verbindungstest durchgeführt, indem versucht wird, von jedem Kommunikationsteilnehmer aus zu allen anderen Kommunikationsteilnehmern, mit denen er gemäß dem erstellten Kommunikationsplan Daten austauschen soll, Daten mit einer vorgewählten Übertragungsqualität zu übertragen. Diese vorgewählte Übertragungsqualität kann z. B. so gewählt werden, dass sichergestellt werden kann, dass Daten unter allen Umständen zuverlässig übertragen werden können. Eine Vorwahl der Übertragungsqualität bedeutet, dass ein Schwellwert definiert wurde, der die geforderte Mindestübertragungsqualität betrifft. Liegt die Übertragungsqualität unter diesem Schwellwert, so wird davon ausgegangen, dass eine zuverlässige Kommunikation nicht möglich ist. Insbesondere muss sichergestellt werden, dass Daten zwischen Kommunikationsteilnehmern in beide Richtungen zuverlässig übertragen werden können, da es z. B. passieren kann, dass zwischen zwei Kommunikationsteilnehmern Daten in die eine Richtung zuverlässig übertragen werden können, während dies in die andere Richtung nicht möglich ist. Es ist bevorzugt, dass der genannte Verbindungstest automatisiert, das heißt ohne das manuelle Zutun eines Technikers oder einer anderen Person durchgeführt wird. Es ist bevorzugt, dass ein Verbindungstest ausschließlich bzgl. derjenigen Kommunikationsteilnehmer insbesondere Sensoren und/oder Aktoren durchgeführt wird, zwischen denen gemäß dem erstellten Kommunikationsplan ein Datenaustausch stattfinden muss. Anders ausgedrückt findet ein Verbindungstest zwischen Kommunikationsteilnehmern, die gemäß dem erstellten Kommunikationsplan keine Daten austauschen müssen, nicht statt. Insofern ist es unerheblich, ob Kommunikationsteilnehmer, die nicht miteinander kommunizieren müssen, in der Lage sind Daten auszutauschen oder nicht.
d) Die Ergebnisse des Verbindungstests werden angezeigt. Dies kann beispielsweise im Kommunikationsplan erfolgen. Hierbei wird in Bezug auf einen Kommunikationsteilnehmer angezeigt, welche anderen Kommunikationsteilnehmer, die mit diesem Kommunikationsteilnehmer Daten austauschen sollen, diese Daten mit der vorgewählten Übertragungsqualität empfangen haben. Alternativ oder zusätzlich ist es möglich anzuzeigen, welche anderen Kommunikationsteilnehmer diese Daten nicht mit der vorgewählten Übertragungsqualität empfangen haben. Eine bevorzugte Variante ist ein grafischer Kommunikationsplan, wie er beispielsweise aus der IEC 61131 bekannt ist. Beispielsweise kann eine Ausführung in Kontaktplandarstellungen oder in Funktionsbausteindarstellungen erfolgen.

Die genannten erfindungsgemäßen Verfahrensschritte müssen nicht in der genannten Reihenfolge stattfinden.

Durch das erfindungsgemäße Verfahren wird die Tatsache genutzt, dass es aus dem erstellten Kommunikationsplan bekannt ist, welcher Kommunikationsteilnehmer mit welchen anderen Kommunikationsteilnehmern Daten austauschen soll. Es ist daher nicht notwendig, dass der Techniker im Rahmen der Installation einen Gebäudeplan erstellt, in dem angezeigt wird, welche Teilnehmer untereinander Daten austauschen sollen. Vielmehr ist es ausreichend, einen ohnehin vorhandenen Kommunikationsplan, in dem die Logik der gewünschten Anwendung hinterlegt ist, zu verwenden. Direkt in diesem Kommunikationsplan wird erfindungsgemäß die Qualität oder Zuverlässigkeit der Verbindung zwischen den einzelnen Kommunikationsteilnehmern angezeigt. Dies kann für den Techniker als Basis dienen, bei einer schlechten oder nicht vorhandenen Verbindung zwischen Kommunikationsteilnehmern, die untereinander Daten austauschen sollen, geeignete Maßnahmen zu treffen. Hierzu kann der Techniker beispielsweise an geeigneter Stelle zwischen diesen Teilnehmern einen Repeater platzieren, sodass die Verbindungsqualität verbessert werden kann.

Es ist bevorzugt, dass die Position der installierten Kommunikationsteilnehmer im und/oder am Gebäude oder einer anderen räumlichen Struktur nach ihrer Installation im Wesentlichen unverändert bleibt. Hierzu können die Kommunikationsteilnehmer beispielsweise fest im Gebäude oder der anderen räumlichen Struktur installiert sein. Das erfindungsgemäße Verfahren kann auch auf Kommunikationsteilnehmer angewandt werden, deren Position lediglich für einen begrenzten Zeitraum unverändert bleibt. Hierbei kann es sich beispielsweise um batteriebetriebene Geräte handeln, die nicht fest im Gebäude installiert sind, z. B. eine Fernbedienung. Solange sich z. B. eine solche Fernbedienung in einem bestimmten Teil des Gebäudes, beispielsweise im Wohnzimmer befindet, kann für diesen Kommunikationsteilnehmer davon ausgegangen werden, dass seine Position in diesem Zeitraum unverändert bleibt. Unter Anwendung des erfindungsgemäßen Verfahrens kann dann für diesen Teil des Gebäudes sichergestellt werden, dass auch dieser Kommunikationsteilnehmer, d.h. in diesem Fall die Fernbedienung, Daten in zuverlässiger Weise mit allen anderen erforderlichen Kommunikationsteilnehmern austauschen kann.

Beispielsweise können ein erster Teil der Kommunikationsteilnehmer Sensoren und ein zweiter Teil der Kommunikationsteilnehmer Aktoren sein. In einem Netzwerk im Bereich Gebäudeautomation werden solche Sensoren und Aktoren in der Regel fest im und/oder am Gebäude installiert. Nach einmaliger Durchführung des erfindungsgemäßen Verfahrens und einer hieran anschließenden geeigneten Positionierung von Repeatern zur Optimierung der Verbindungsqualität kann somit eine gleichbleibende Verbindungsqualität zwischen den Kommunikationsteilnehmern sichergestellt werden, da sich ihre räumliche Zuordnung zu einander nicht mehr ändert.

In einer weiter bevorzugten Ausführungsform wird als Ergebnis des Verbindungstests zusätzlich angezeigt, wenn ein Kommunikationsteilnehmer Daten von einem anderen Kommunikationsteilnehmer mit einer Übertragungsqualität empfangen hat, die niedriger als die vorgewählte Übertragungsqualität ist. Somit wird nicht lediglich angezeigt, ob Daten von einem Kommunikationsteilnehmer empfangen wurden, sondern es kann auch zusätzlich angezeigt werden, wenn Daten zwar empfangen wurden, dies jedoch mit einer schlechten Qualität geschehen ist. Dies kann möglicherweise darauf hindeuten, dass in dieser qualitativ minderwertigen Kommunikationsverbindung Daten nicht unter allen Umständen erfolgreich zwischen den Kommunikationsteilnehmern ausgetauscht werden können. Auch hier kann es sinnvoll sein, durch eine geeignete Platzierung eines Repeaters Abhilfe zu schaffen.

Weiterhin ist es bevorzugt, beim Anzeigen des Ergebnisses des Verbindungstests zusätzlich den Installationsort eines Aktors anzuzeigen, sofern sich dieser vom Wirkort dieses Aktors unterscheidet. Hierbei ist der Wirkort eines Aktors derjenige Ort im und/oder an einem Gebäude oder einer anderen räumlichen Struktur, an dem die Wirkung des Aktors stattfindet. Beispielsweise ist es möglich, dass ein Dimmaktor, durch den eine Lampe gesteuert wird, im Keller eines Gebäudes, z. B. in einem Technikraum angeordnet ist. Die durch diesen Dimmaktor angesteuerte Lampe (oder Lampen) kann sich jedoch in einem anderen Raum des anderen Gebäudes befinden. Dieser andere Raum wäre der Wirkort des Dimmaktors, während der Technikraum im Keller der Installationsort dieses Dimmaktors wäre. Es wird bevorzugt, dass der Installationsort und der Wirkort eines Aktors, sofern sie sich voneinander unterscheiden, gleichzeitig angezeigt werden oder zwischen einer Anzeige des Wirkortes und des Installationsortes umgeschaltet werden kann. Eine Anzeige des Installationsorts eines Aktors bietet den Vorteil, dass leichter ein geeigneter Ort für einen Repeater gewählt werden kann, sofern die Verbindungsqualität zwischen diesem Aktor und einem dazugehörigen Sensor nicht gut genug ist. Würde lediglich der Wirkort des Aktors (z. B. der Raum in dem die Lampe leuchtet) angezeigt werden, wüsste ein Techniker nicht, an welcher Stelle geeigneter Weise ein Repeater angeordnet werden sollte, da die schlechte Verbindung nicht zwischen dem Sensor und dem Wirkort sondern zwischen dem Sensor und dem Installationsort eines Aktors besteht. Dennoch hilft die parallele oder abwechselnde Anzeige des Wirk- und Installationsorts eines Aktors einem Techniker erheblich bei der Installation, da er sofort basierend auf einer festgestellten Fehlfunktion (z. B. Lampe im Wohnzimmer leuchtet nicht wenn der Sensor betätigt wird) geeignete Gegenmaßnahmen treffen kann (z. B. Installation eines Repeaters an einem geeigneten Ort zwischen dem entsprechenden Sensor und dem Installationsort des Aktors, der die Lampe ansteuert).

Es ist bevorzugt, dass die genannten Informationen im Kommunikationsplan angezeigt werden. Es wird somit ein sehr intuitives Werkzeug bereitgestellt, um Mängel in der Verbindungsqualität zwischen Kommunikationsteilnehmern zu detektieren und zu beheben.

Es ist bevorzugt, dass mindestens einer der Kommunikationsteilnehmer ausschließlich oder zusätzlich zu einer weiteren Funktion als Repeater für die Signale anderer Kommunikationsteilnehmer fungiert. Beispielsweise kann ein Sensor, der eigentlich ein Lichtschalter ist, oder ein Aktor zusätzlich die Funktion eines Repeaters erfüllen.

Es ist bevorzugt, dass die Information, welche der Kommunikationsteilnehmer zusätzlich die Funktion eines Repeaters wahrnehmen können, ebenfalls in einer Software, die ein Techniker zur Installation nutzt, hinterlegt ist. Sofern beispielsweise der Verbindungstest ergeben hat, dass ein bestimmter Sensor mit einem bestimmten Aktor Daten nicht in ausreichender Qualität übertragen kann, könnte der Techniker entscheiden, in einem Raum der sich an geeigneter Stelle zwischen diesen beiden Kommunikationsteilnehmern befindet, einen Repeater zu verwenden. Hierzu ist es nicht notwendig, einen neuen Kommunikationsteilnehmer als Repeater zu installieren. Vielmehr kann der Techniker sich durch die genannte Softwarefunktion anzeigen lassen, welche Kommunikationsteilnehmer in dem von ihm gewählten Raum als Repeater fungieren können. Von diesen Kommunikationsteilnehmern kann er sich einen aussuchen und diesen als Repeater konfigurieren. Anschließend wird der Verbindungstest für diese beiden Kommunikationsteilnehmer unter Zuhilfenahme des Repeaters erneut ausgeführt. Sofern sein Ergebnis positiv ist, hat der Repeater seine Funktion erfüllt. Andernfalls müsste ein Repeater an anderer Stelle platziert werden. Es wird somit insbesondere im Kommunikationsplan nach Auswählen eines Raums oder eines anderen Teils des Gebäudes oder einer anderen räumlichen Struktur angezeigt, welche Repeater, bzw. welche repeaterfähigen Kommunikationsteilnehmer, sich in diesem Raum oder Teil befinden.

Es wird weiterhin bevorzugt, dass einer der Kommunikationsteilnehmer ein Server ist, mit dem alle übrigen Kommunikationsteilnehmer Daten austauschen. Dies ist erforderlich, da der Server mit allen Kommunikationsteilnehmern kommunizieren muss, um eine ordnungsgemäße Funktion des Gesamtsystems zu gewährleisten. Auch der Server kann in der bisher beschriebenen Weise in das erfindungsgemäße Verfahren zum Optimieren der Verbindungsqualität eingebunden werden.

Im Folgenden werden bevorzugte Ausführungsformen der Erfindung anhand von Figuren erläutert.

Es zeigen:
- Figur 1: Eine Darstellung eines Gebäudeautomationsnetzwerks, in dem das erfindungsgemäße Verfahren angewandt werden kann.
- Figur 2: Eine beispielhafte Darstellung eines Kommunikationsplans
- Figuren 3 - 5: Screenshots von verschiedenen Softwareschritten einer Software, die zur Durchführung des erfindungsgemäßen Verfahrens verwendet wird.

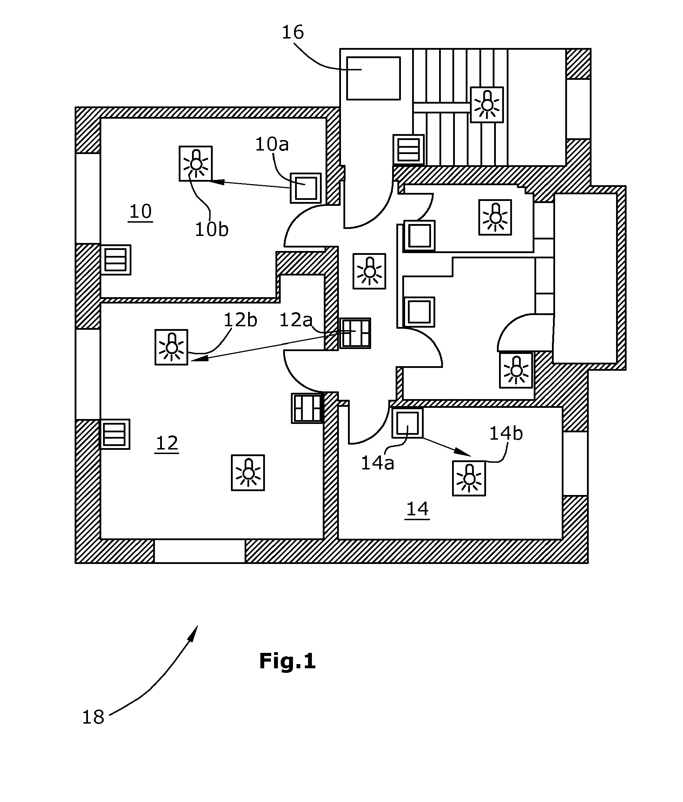

In Figur 1 ist eine Etage eines Gebäudes 18 dargestellt, die unter anderem drei Räume 10, 12, 14 aufweist, in oder an denen jeweils Sensoren 10a, 12a, 14a und Aktoren 10b, 12b, 14b angeordnet sind. Das Gebäude 18 weist ferner einen Server 16 auf, der mit allen Kommunikationsteilnehmern Daten austauscht.

Der erste Raum 10 weist den Sensor 10a auf, durch den der Aktor 10b, beispielsweise eine Lampe, in diesem Raum 10 betätigt wird. Somit müssen diese beiden Kommunikationsteilnehmer 10a, 10b Daten untereinander austauschen. Zum Beispiel ist es nicht notwendig, dass der Sensor 10a mit dem Aktor 14b in Raum 14 kommunizieren kann, da der Aktor 14b nicht durch den Sensor 10a betätigt wird. Insofern muss durch das erfindungsgemäße Verfahren u. a. sichergestellt werden, dass Daten mit hinreichender Qualität vom Sensor 10a zum Aktor 10b und umgekehrt übertragen werden können. Ferner muss sichergestellt werden, dass diese beiden Kommunikationsteilnehmer mit dem Server 16 kommunizieren können. Ähnlich verhält es sich mit den übrigen in Figur 1 dargestellten Kommunikationsteilnehmern.

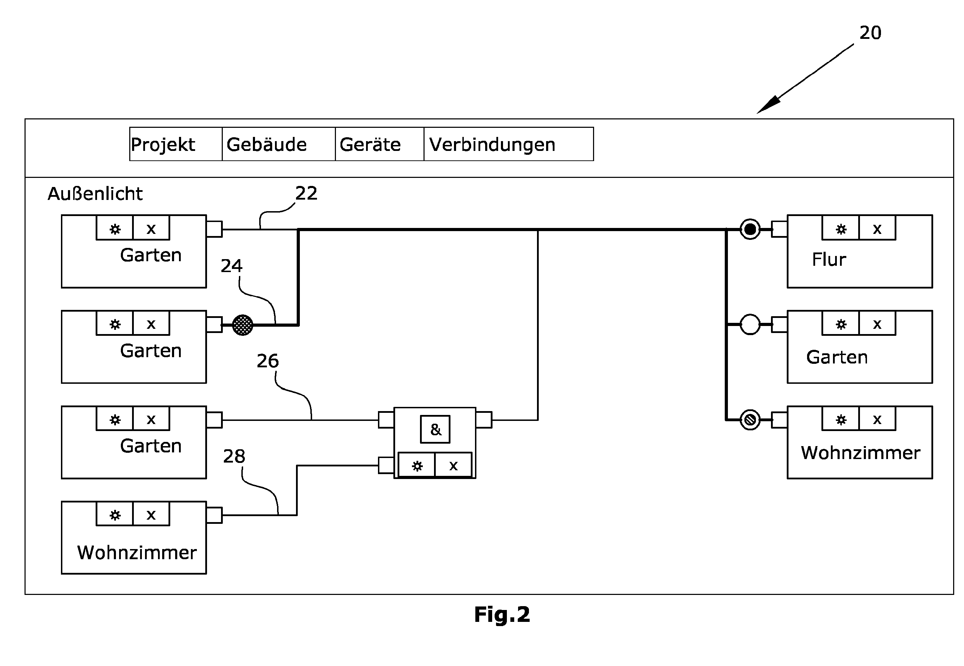

Im Rahmen der Installationsprozedur wird ein Kommunikationsplan 20 erstellt. Ein solcher ist beispielhaft in Figur 2 dargestellt. In diesem Kommunikationsplan 20 ist durch Kommunikationsverbindungen 22, 24, 26, 28 hinterlegt, welche Kommunikationsteilnehmer mit welchen anderen Kommunikationsteilnehmern Daten austauschen sollen. Hierbei sind auf der linken Seite Sensoren und auf der rechten Seite Aktoren angeordnet. Bei den Sensoren wird der jeweilige Installationsort angezeigt. Bei den Aktoren auf der rechten Seite wird sowohl der Installationsort als auch, z. B. nach einem Umschalten der Anzeige, der Wirkort angezeigt. Dies kann beispielsweise durch eine Schaltfläche zum Umschalten geschehen.

Im Rahmen des erfindungsgemäßen Verfahrens wird ein Kommunikationsteilnehmer gewählt, um anzuzeigen, mit welchen anderen Kommunikationsteilnehmern, mit denen dieser Kommunikationsteilnehmer Daten austauschen soll, diese Daten mit einer guten Übertragungsqualität ausgetauscht werden können. In Figur 2 wurde beispielsweise der zweite Sensor von oben auf der linken Seite ausgewählt und entsprechend mit einem Punkt gekennzeichnet. Nun wird z. B. durch eine dickere Kommunikationsverbindung 24 angezeigt, mit welchen anderen Kommunikationsteilnehmern dieser Sensor Daten austauschen soll. Wie in Figur 2 sichtbar, ist eine gute Verbindungsqualität nur beim mittleren der drei Aktoren auf der rechten Seite gegeben. Mit dem oberen Aktor können gar keine Daten ausgetauscht werden, da keine Verbindung besteht, während mit dem unteren Aktor Daten nur mit eingeschränkter Übertragungsqualität ausgetauscht werden können. Somit müssen bezüglich des oberen und unteren Aktors geeignete Gegenmaßnahmen getroffen werden. Entsprechend wird zur Diagnose der Verbindungsqualität mit allem weiteren Kommunikationsteilnehmern verfahren.

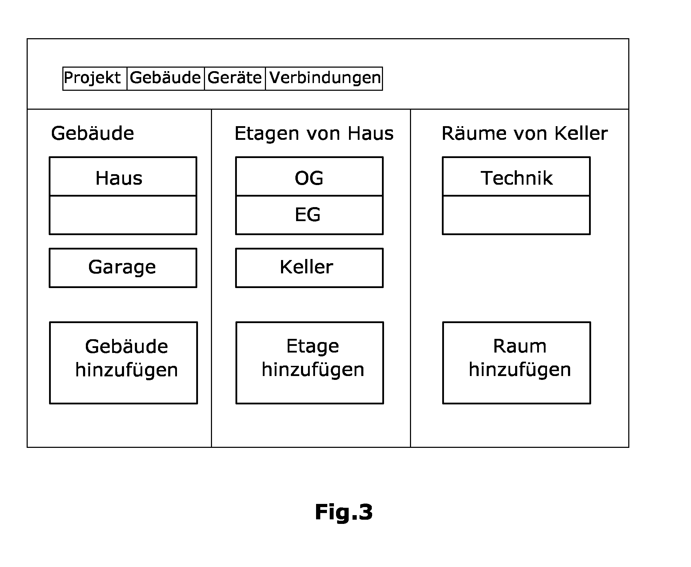

In den Figuren 3 - 5 wird dargestellt, wie eine Software dabei helfen kann, einen Kommunikationsplan wie er beispielsweise in Figur 2 dargestellt ist, zu erstellen. Gemäß Figur 3 wird zunächst vom Techniker oder Projekteur die Gebäudestruktur angelegt. Beispielsweise kann das Gebäude aus einem Haus und einer Garage bestehen. Die einzelnen Etagen des Hauses werden in der mittleren Spalte angelegt (Keller, Erdgeschoss und Obergeschoss). In der dritten Spalte werden Räume in einer bestimmten Etage (hier im Keller) angelegt. In diesem Fall befindet sich im Keller ein Technikraum. Somit ist der Software die Struktur des Gebäudes 18 bekannt, ohne dass sie jedoch Einzelheiten über die Abmessungen des Gebäudes, Abstände zwischen den Kommunikationsteilnehmern usw. kennt. Der Software ist somit lediglich bekannt, welche Kommunikationsteilnehmer in welchem Teil des Gebäudes angeordnet sind. Die genannten Schritte erfolgen unter dem Reiter "Gebäude".

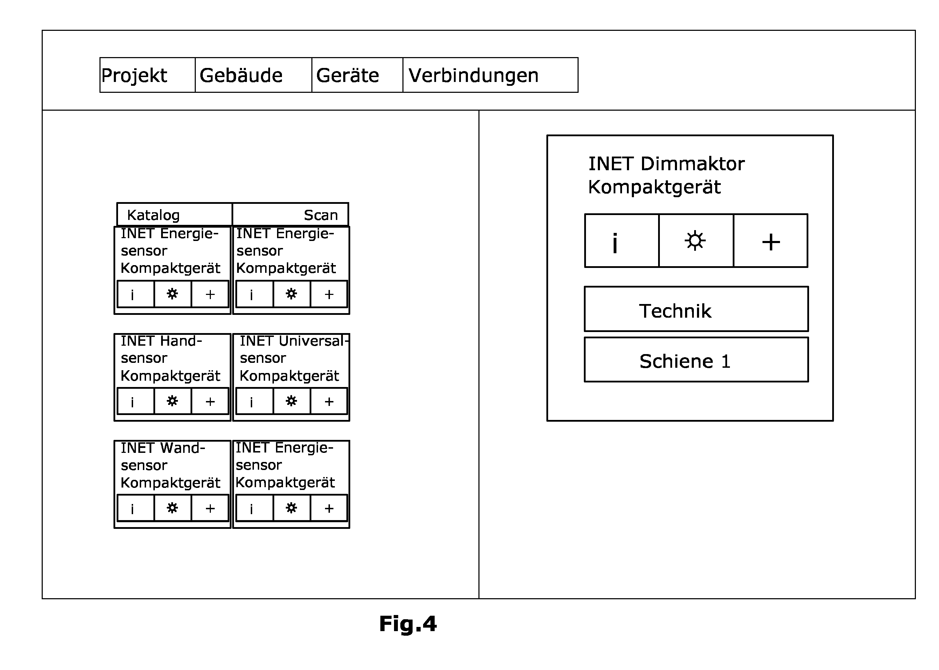

Gemäß Figur 4 werden nun vorhandene Geräte in einem ersten Schritt unter ihrem Installationsort abgelegt. Hier wird beispielsweise ein Dimmaktor dem Technikraum im Keller zugeordnet. Diese Zuordnung kann manuell durch den Techniker erfolgen. Entsprechend wird mit allen anderen Kommunikationsteilnehmern im Gebäude 18 verfahren. Die letzt genannten Schritte erfolgen unter dem Reiter "Geräte".

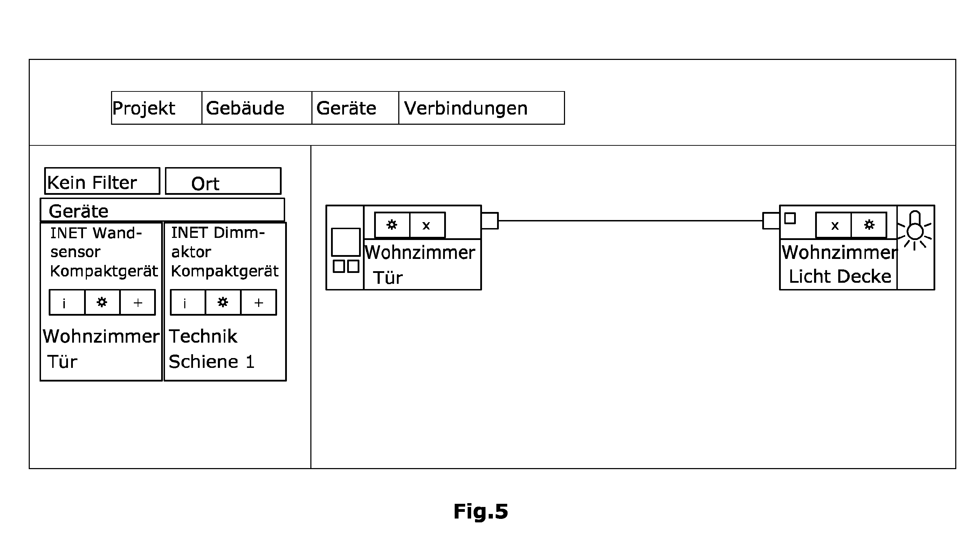

Gemäß Figur 5 werden nun unter dem Reiter "Verbindungen" Kommunikationsverbindungen zu Steuer- und/ oder Diagnosezwecken zwischen Sensoren auf der linken Seite und Aktoren auf der rechten Seite erstellt. Hierbei werden Aktoren unter ihrem Wirkort aufgeführt, wobei wie bereits beschrieben zusätzlich der Installationsort angezeigt werden kann. Die Zuordnung eines Aktors zu seinem Wirkort erfolgt dadurch, dass er beispielsweise dem Plan "Licht Decke" zugeordnet wird. Hierzu kann dieser Aktor durch den Techniker in den Plan "Licht Decke" hineingezogen werden, nachdem dieser Plan erstellt wurde. Der Plan ist vorzugsweise derart bezeichnet, dass beim Lesen dieser Bezeichnung sofort klar wird, welchen Wirkort dieser Plan betrifft. Der Verbindungs- oder Kommunikationsplan gemäß Figur 5 ist ein sehr einfaches Beispiel für einen Kommunikationsplan, wie er beispielsweise auch in Figur 2 dargestellt ist.

## Patentansprüche

1. Verfahren zum Austauschen von Steuerungs- und/ oder Diagnosedaten zwischen Kommunikationsteilnehmern (10a, 10b, 12a, 12b, 14a, 14b, 16) in einem drahtlosen Netzwerk, insbesondere in einem Gebäudeautomationssystem, wobei das Verfahren die folgenden Schritte aufweist:
a) Installieren der Kommunikationsteilnehmer (10a, 10b, 12a, 12b, 14a, 14b, 16) an verschiedenen Stellen eines Gebäudes (18) oder einer anderen räumlichen Struktur, in der die Kommunikationsteilnehmer Daten austauschen sollen
b) Erstellen eines Kommunikationsplans (20), in dem durch Kommunikationsverbindungen (22, 24, 26, 28) hinterlegt ist, welche Kommunikationsteilnehmer mit welchen anderen Kommunikationsteilnehmern Daten austauschen sollen
c) Ausführen eines Verbindungstests, indem versucht wird, von jedem Kommunikationsteilnehmer (10a) aus zu allen anderen Kommunikationsteilnehmern (10b, 16), mit denen er gemäß dem erstellten Kommunikationsplan (20) Daten austauschen soll, Daten mit einer vorgewählten Übertragunsqualität zu übertragen
d) Anzeigen der Ergebnisse des Verbindungstests, indem insbesondere im Kommunikationsplan (20) in Bezug auf einen Kommunikationsteilnehmer (10a) angezeigt wird, welche anderen Kommunikationsteilnehmer (10b, 16), die mit diesem Kommunikationsteilnehmer (10a) Daten austauschen sollen, diese Daten mit der vorgewählten Übertragungsqualität empfangen haben und/oder welche anderen Kommunikationsteilnehmer (10b, 16) diese Daten nicht mit der vorgewählten Übertragungsqualität empfangen haben.

2. Verfahren nach Anspruch 1, **dadurch gekennzeichnet, dass** die Position der installierten Kommunikationsteilnehmer (10a, 10b, 12a, 12b, 14a, 14b, 16) im und oder am Gebäude (18) oder einer anderen räumlichen Struktur nach ihrer Installation im Wesentlichen unverändert bleibt.

3. Verfahren nach Anspruch 1 oder 2, **dadurch gekennzeichnet, dass** ein erster Teil der Kommunikationsteilnehmer (10a, 12a, 14a) Sensoren und ein zweiter Teil der Kommunikationsteilnehmer (10b, 12b, 14b) Aktoren sind.

4. Verfahren nach Anspruch 3, **dadurch gekennzeichnet, dass** beim Anzeigen des Ergebnisses des Verbindungstests zusätzlich der Installationsort eines Aktors (10b, 12b, 14b) angezeigt wird, sofern sich dieser vom Wirkort des Aktors unterscheidet, wobei der Wirkort eines Aktors (10b, 12b, 14b) derjenige Ort im und/oder an einem Gebäude (18) oder einer anderen räumlichen Struktur ist, an dem die Wirkung des Aktors stattfindet.

5. Verfahren nach einem der Ansprüche 1 bis 4, **dadurch gekennzeichnet, dass** als Ergebnis des Verbindungstests zusätzlich angezeigt wird, wenn ein Kommunikationsteilnehmer (10a, 10b, 12a, 12b, 14a, 14b, 16) Daten von einem anderen Kommunikationsteilnehmer mit einer Übertragungsqualität empfangen hat, die niedriger als die vorgewählte Übertragungsqualität ist.

6. Verfahren nach Anspruch 1 - 5, **dadurch gekennzeichnet, dass** mindestens einer der Kommunikationsteilnehmer (10a, 10b, 12a, 12b, 14a, 14b, 16) ausschließlich oder zusätzlich zu einer weiteren Funktion als Repeater für die Signale anderer Kommunikationsteilnehmer fungiert.

7. Verfahren nach Anspruch 6, **dadurch gekennzeichnet, dass** insbesondere im Kommunikationsplan (20) nach Auswählen eines Raums (10, 12, 14) oder eines anderen Teils des Gebäudes (18) oder einer anderen räumlichen Struktur angezeigt wird, welche Repeater sich in diesem Raum oder Teil befinden.

8. Verfahren nach Anspruch 1 - 7, **dadurch gekennzeichnet, dass** einer der Kommunikationsteilnehmer ein Server (16) ist, mit dem alle übrigen Kommunikationsteilnehmer (10a, 10b, 12a, 12b, 14a, 14b) Daten austauschen.

9. Verfahren nach einem der Ansprüche 1 bis 8, **dadurch gekennzeichnet, dass** die Ergebnisse des Verbindungstests in einem Kommunikationsplan grafisch dargestellt werden.

10. Verfahren nach einem der Ansprüche 1 bis 9, **gekennzeichnet durch** die folgenden zusätzlichen Schritte:
Auswählen eines Kommunikationsteilnehmers im grafischen Kommunikationsplan, für den angezeigt werden soll, mit welchen anderen Kommunikationsteilnehmern, mit denen dieser ausgewählte Kommunikationsteilnehmer Daten austauschen soll, diese Daten mit einer guten Übertragungsqualität ausgetauscht werden können;
Anzeigen der Verbindungsqualität zwischen dem ausgewählten Kommunikationsteilnehmer und den übrigen Kommunikationsteilnehmern, mit denen dieser Daten austauschen soll.

11. Verfahren nach einem der Ansprüche 1 bis 10, **dadurch gekennzeichnet, dass** der Datenaustausch im erfindungsgemäßen Verfahren direkt zwischen den Kommunikationsteilnehmern (10a, 10b, 12a, 12b, 14a, 14b, 16) ohne eine Zwischenschaltung einer zentralen Komponente insbesondere eines Servers erfolgt.

12. Verfahren nach einem der Ansprüche 1 bis 11, **dadurch gekennzeichnet, dass** der Verbindungstest gemäß Merkmal c) des Anspruchs 1 ausschließlich in Bezug auf diejenigen Kommunikationsteilnehmer durchgeführt wird, zwischen denen gemäß dem erstellten Kommunikationsplan ein Datenaustausch stattfinden muss, sodass ein Verbindungstest bzgl. derjenigen Kommunikationsteilnehmer, die gemäß dem erstellten Kommunikationsplan keine Daten austauschen müssen, nicht durchgeführt wird.
